# EUROPEAN PATENT SPECIFICATION

(11) **EP 4 678 471 B1**
(45) Date of publication and mention of the grant of the patent: **29.04.2026**
(21) Application number: 25187939.1
(22) Date of filing: 07.07.2025
(51) Int. Cl.: B60P 3/40, B60P 1/02, B66F 9/065

(54) **DEVICE AND METHOD FOR TRANSPORTING A LOAD PAST OBSTACLES IN THE AIR**
VORRICHTUNG UND VERFAHREN ZUM TRANSPORT EINER LAST AN HINDERNISSEN IN DER LUFT
DISPOSITIF ET PROCÉDÉ DE TRANSPORT D'UNE CHARGE DEVANT DES OBSTACLES DANS L'AIR

(30) Priority: 09.07.2024 BE 202405439
(43) Date of publication of application: 14.01.2026
(73) Proprietor: Sarens NV, 1861 Wolvertem (BE)
(72) Inventor: SARENS, Carl Leo, 1840 Steenhuffel (BE)
(74) Representative: Bureau M.F.J. Bockstael NV

(56) References cited:
- EP-A1- 2 974 905
- WO-A1-2022/002936
- DE-U1- 202012 009 041

## Description

The present invention relates to the transport of loads, more specifically bulky loads, to the location where the load is to be used. More specifically the invention relates to a device and a method for moving loads past high-voltage lines, overhead lines or other obstacles extending in the air.

Big constructions or construction components applied in road infrastructure, including waterways and railways, such as for example bridges, masts, spans or components thereof, but also other bulky objects for industrial application, generally loads, are often built and fully or partly assembled at another location than the location where the load needs to be installed. Typically, this means that such load needs to be moved by road, rail, over water and/or over rough terrain, that may or may not have to be temporarily levelled and paved, from the production and/or assembly location to the installation location. Transport systems for bulky loads are known e.g. from EP 2974905 A1, WO 2022/002936 A1 or DE 202021009041 U1.

Due to the size of the loads it regularly occurs that obstacles extending in the air block the passage of such loads during transport. When there are detours that are free of such obstacles this is of course a possible solution but this results in time loss and increases the costs. Often, however, a detour whereby obstacles can be avoided is not possible. In the event that the obstacles are lines, a possibility is to temporarily uncouple or interrupt said lines. However, this is complex organisationally, has a major negative impact economically and causes considerable nuisance for local residents and companies.

An objective of the invention is to provide a solution for moving loads over obstacles with no or practically no impact on the obstacle such as for example in case of lines without temporarily uncoupling or interrupting the lines.

Yet a further objective of the invention is to provide a solution that is efficient and effective.

Another objective of the invention is to provide a solution which allows the load to be transported in a stable and safe way past the obstacle.

To at least partially provide a solution to one or several of the aforementioned or other known problems and/or to meet one or several of the aforementioned objectives, the invention provides a device for transporting a load past an obstacle in the air comprising a support structure that is moveable in a transport direction and at least three pairs of upward directed supports whereby the supports of each pair are positioned at a distance from each other in the transport direction and whereby the supports are tiltably mounted on the support structure.

Typically, the support structure consists of a steel platform or a frame formed by horizontal beams which are connected relative to each other, possibly using bracing struts. Typically, the support structure is provided with wheels or other transport means for moving the device. The number of support pairs and the shape of the frame can be aligned to each other and to the dimensions and the weight of the load such that the load can be borne in a stable way. The support pairs can, for example, be provided on the corner points of the frame such that the frame, in the case of three pairs of supports or four pairs of supports, the support pairs form a triangle or square respectively. Obviously more pairs of supports are possible and said support pairs do not necessarily have to be placed on or near the corner points of the frame.

The device according to the invention is a stable embodiment whereby the device is provided with four pairs of supports and two beams placed at a distance from each other which extend parallel to the transport direction, whereby on each of the beams two pairs of supports are placed and the supports are placed on the respective beams opposite each other. Opposite in the context of this invention comprises both squarely opposite, or in other words the supports on the respective beams entirely overlap relative to each other in the transport direction, and diagonally opposite, or in other words the supports on the respective beams are placed partially overlapping or not-overlapping relative to each other in the transport direction. When in case of diagonally opposite placement the support pairs are provided on the corner points of the frame the frame substantially has the form of a parallelogram for example.

Each upward directed support of the device comprises a jack connected to the support and moveable in an upward direction between a supporting position, wherein the jack in use supports the load and a resting position, wherein the jack in use does not support the load. The jack can for example be executed as a hydraulic or pneumatic pressure cylinder.

Each upward directed support is provided with a support connection which at or near its one end is hingedly connected to the support and at or near its other end is hingedly connected to the support structure, whereby the support connection is configured such that the support connection supports the support when tilting.

Preferably, the upward directed supports are height adjustable such that when in use the height of the supports can be adapted to the position where the obstacle is located in the air such that when moving the device past the obstacle, the obstacle is located between the support structure and the load borne by the device in terms of height.

In an embodiment the upward directed supports comprise a hollow tubular, for example a cylindrical or beam-shaped, structure. Preferably, the jack is applied in the hollow tubular structure of the support. The upward directed supports may comprise a base on which the tubular structure can be mounted. The base can be provided with a bottom plate with which the upward directed support rests on the support structure in non-tilted condition of said support if tiltably placed on the support structure

Optionally, the upperside of the supports can be provided with a top plate which is workably connected to the jack and which, in the resting position of the jack, rests on the tubular structure and in the supporting position of the jack is separated from the tubular structure. This allows for a very stable configuration during transport because when moving the device the jacks when in use can be placed in their resting position whereby the load is transferred to the support structure via the top plate, the tubular structure and the base without, or practically without the jack bearing any load.

Optionally, the tubular structure can also be constructed upwardly from several hollow loose segments which relative to each other are connected to each other or can be detached from each other, for example by retracting and extending, respectively, two successive segments using a tongue and groove system, for example. In addition an extra locking device may be provided which prevents the segments from unintentionally shifting relative to each other. The height of the support then depends on the chosen number of segments. Preferably, the loose segments on one side are provided with an opening with a cross-section that is greater than the cross-section of the moveable section of the jack and the height of a segment is less than the travel distance of the jack when moving between its resting position and its supporting position. This allows, with the jack in its supporting position and with or without the load being present, the upper segment of the tubular structure to be removed by extending or to insert an additional segment on top of the tubular structure using the available space between the tubular structure and the top plate.

The upward directed supports of the device are tiltably mounted on the support structure around a support shaft. The support shaft is in a plane parallel to the surface over which the device moves, typically horizontal. Preferably, the support shaft forms an angle with the transport direction with an absolute value in the range from 0° to 60°. Among other things, depending on the chosen distance between the supports of one and the same pair, this ensures that if one support is tilted away the other support of the same pair is not blocking the way. Preferably, the supports are tiltable over an angle of 90° or more such that the space under the borne load, through which the obstacle can pass, can be utilised to its maximum height.

In an embodiment according to the invention, the support connections of the supports of the device are mounted on one side of the support which when tilting away the support is oriented to the support structure or to the bottom. Preferably, the support connection is configured such that when tilting the support toward or away from the support structure the ends of the support connection move toward or away from each other respectively. An example of such support connection that facilitates a gradual tilting movement and at the same time ensures a good support of the support during tilting is a support connection executed as a hydraulic or pneumatic pressure cylinder.

The invention also relates to a method for transporting a load past an obstacle in the air using a device comprising a support structure moveable in a transport direction and at least three pairs of upward directed supports, whereby the supports of each pair are positioned at a distance from each other in the transport direction and whereby the supports are tiltably mounted on the support structure, each support comprising a jack connected to the support and moveable in an upward direction between a supporting position, wherein the jack in use supports the load and a resting position, wherein the jack in use does not support the load and a support connection which at or near its one end is hingedly connected to the support and at or near its other end is hingedly connected to the support structure, whereby the support connection is configured such that the support connection supports the support during tilting, or using the device as specified in the previous embodiments or a combination thereof.

The method comprises the steps of:
- moving the device with the load borne by the supports in the transport direction toward the obstacle which extends in a height-adjustable way between the load and the support structure until further movement is obstructed by one or more supports;
- jacking up the load by moving the jacks to the supporting position; preferably, the jacks are controlled such that jacking up the load is done by simultaneously moving the jacks of all supports to the supporting position;
- clearing the one or more supports that obstruct the further movement of the load by moving the corresponding jacks to the resting position such that the load is borne by at least one support of each pair of supports;
- tilting away the one or more cleared supports toward the support structure;
- moving the device with the load in the transport direction until the obstacle is located past the tilted away supports.

In an embodiment of the invention the method comprises the further steps of:
- tilting back the tilted away supports while the jacks of the supports bearing the load are located in the supporting position and the obstacle is located in the transport direction past the tilted back supports;
- moving the jacks of the tilted back supports to the supporting position;
- clearing the one or more supports that obstruct the further movement of the load by moving the corresponding jacks to the resting position such that the load is borne by at least one support of each pair of supports;
- tilting away the one or more cleared supports toward the support structure; and
- moving the device with the load in the transport direction until the obstacle is located past the tilted away supports.

This method allows the load to be moved progressively past the obstacle by iteratively repeating the steps of tilting away obstructing supports, moving the device up to the next support (s) obstructing the obstacle and tilting back the tilted away supports until the load is past the obstacle. As the load is always borne by at least one support of each pair of supports during the whole process, the load is always borne in a stable and safe way.

Also in an embodiment of the invention, the method, after tilting away the cleared supports and before moving the device further, comprises the step of moving the jacks supporting the load from the supporting position to the resting position. This has the advantage that when effectively moving the device, the jacks do not or barely bear any load, which benefits the stability.

With the intention of better showing the characteristics of the invention, a preferred embodiment of a device and method for transporting a load past an obstacle in the air according to the invention is described hereinafter, by way of an example without any limiting nature, with reference to the accompanying drawings wherein:
Figures 1 and 2 schematically show an embodiment of the device for transporting a load past an obstacle in the air according to the invention in side view and front view respectively.
Figure 3 schematically shows a view of an upward directed support of the device shown in figures 1 and 2, in non-tilted condition with the jack in supporting position.
Figure 4 schematically shows views of an upward directed support of the device shown in figures 1 and 2, when tilting with the jack in resting position.
Figures 5 A to D schematically show the different conditions of the device shown in fig. 1 and 2 when transporting a load past an obstacle.

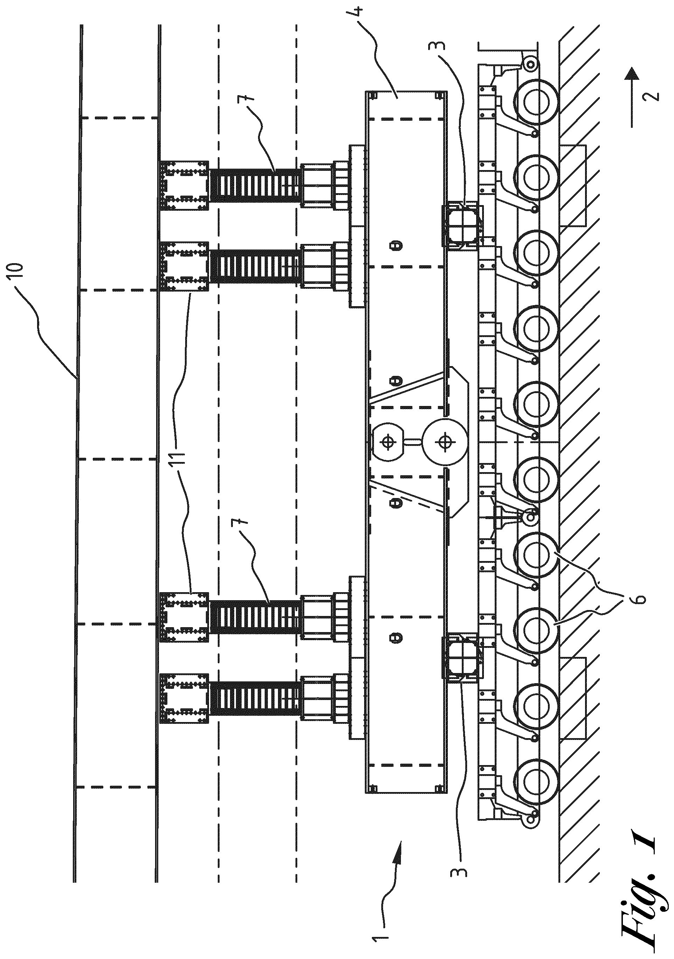

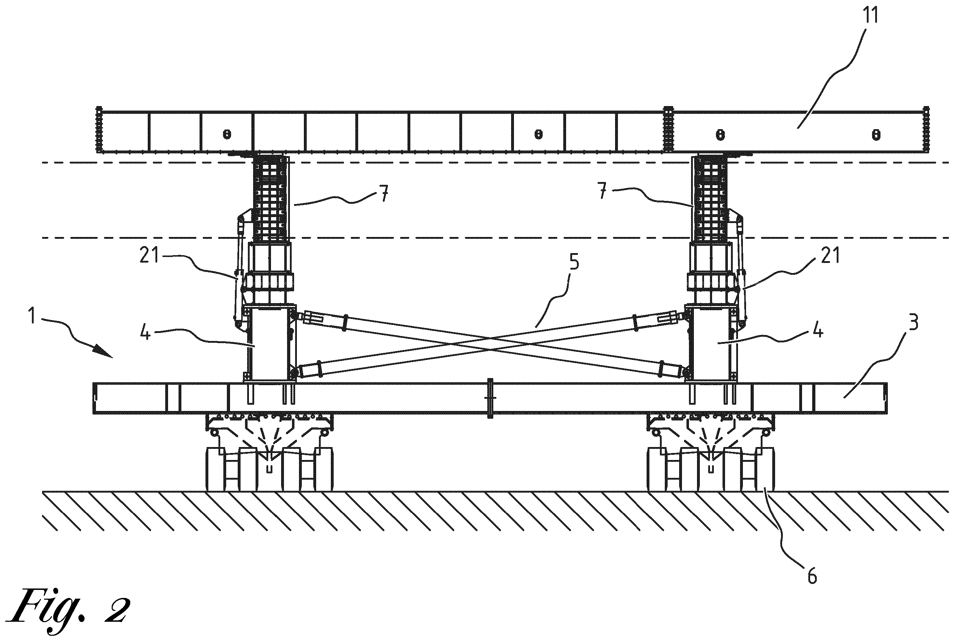

The example shown in figures 1 and 2 of the device for transporting a load past an obstacle in the air according to the invention comprises a steel support structure 1. The support structure 1 comprises a frame formed by two parallel crossbeams 3 placed transversely on the transport direction 2 at a distance from each other on which two parallel support beams 4 are placed at a distance from each other parallel to the transport direction 2. The support beams 4 are interconnected by bracing struts 5 which are mounted on the inward facing sides of the support beams in a crosswise way. Said bracing struts may also be omitted but particularly if the support beams have a certain height, they can be applied to improve the stability of the support structure 1. The support structure 1 is provided with a wheelbase which is attached to the underside on the frame. Wheels 6 are mounted on the wheelbase such that the support structure is mobile.

Eight upward directed supports 7 placed in pairs are located on the support beams 4 of the support structure 1. Each pair of supports is placed near a point where the support beams 4 and the crossbeams intersect. The supports 7 of each pair are positioned at a distance from each other in the transport direction 2. Thus, two pairs of supports 7 are placed on each of the support beams 4 such that the supports on the respective support beams are placed opposite each other.

The upward directed supports 7 are placed on the support beams 4 and attached to the support structure 1 using a hinge connection 8 with a support shaft 9 around which the upward directed support can tilt.

The load 10 to be transported is provided with support beams 11 on the underside. The position of the support beams on the load 10 is aligned to the position of the supports on the support structure such that the load rests on the supports 7 via the support beams 11. The support beams ensure a good contact surface between the supports and thus contribute to a good stability. Typically, after transporting and/or placing the load said support beams are removed.

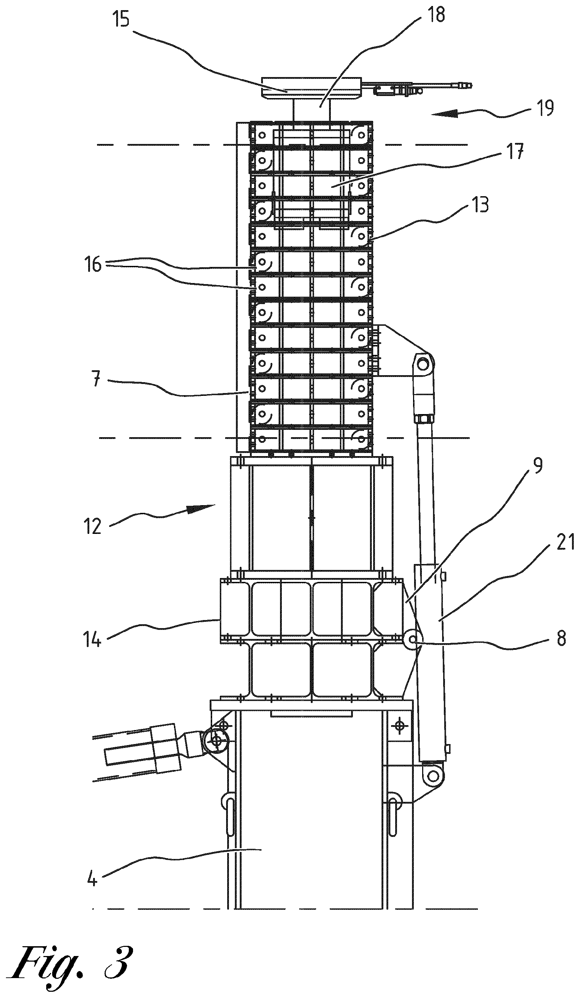

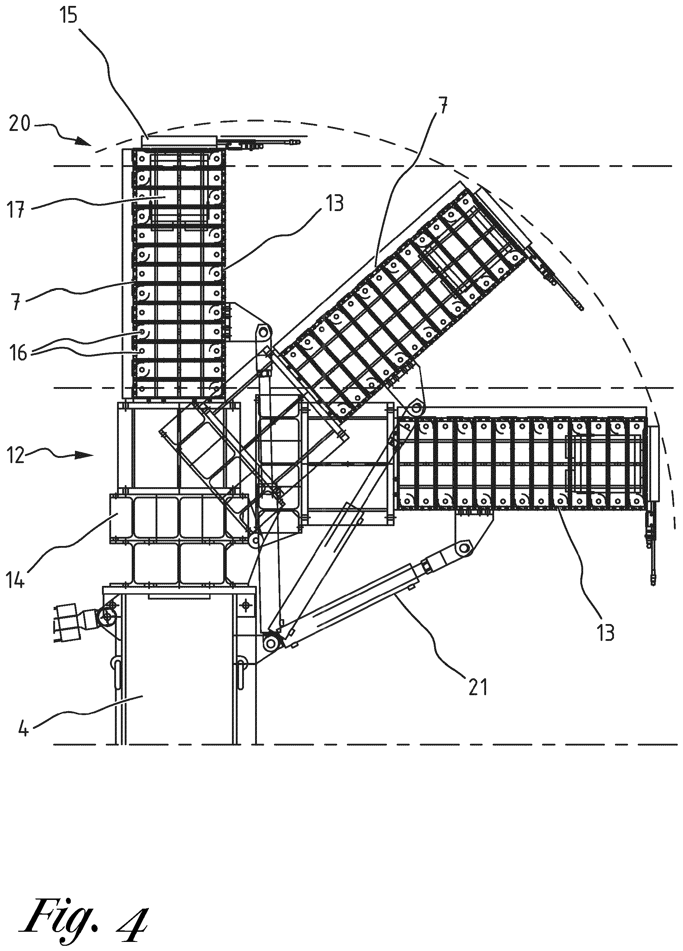

Each upward directed support 7 (as also shown in fig.3 and 4) comprises a base 12 with a bottom plate 14 with which the upward directed support 7 rests on the support structure 1 in non-tilted condition and a hollow beam-shaped structure 13 which is mounted on the base. The beam-shaped structure 13 is constructed from removable segments 16 that are connected to each other. This allows the height of the support to be adapted to the height at which the obstacle is located by adding or removing segments such that the load 10 can pass over the obstacle. Adding or removing a segment at the top of the beam-shaped structure can be done by retracting or extending, respectively, two successive segments using a tongue and groove system. The upperside of the support 7 is provided with a top plate 15 which is mounted in a height adjustable way on the beam-shaped structure 13.

Each upward directed support 7 comprises an upward directed pressure cylinder 17 connected to the support and workably connected to the top plate 15 applied in the hollow beam-shaped structure 13. The pressure cylinder consists of a cylindrical casing which is closed at one end by a bottom part and at the other opposite end by a lid. In the casing, a movable piston is applied that is connected to a piston rod 18 which protrudes outwardly through the lid. The bottom side of the upward directed pressure cylinder is connected to the beam-shaped structure 13 of the support. At its lid side at the outwardly protruding end of the piston rod 18, the upward directed pressure cylinder 17 is connected to the top plate 15.

Moving the piston toward or away from the lid, or in other words extending or retracting, respectively, the piston rod 18, is done by adding or removing a fluid to or from the corresponding chamber in the casing. The fluid is supplied and discharged via pipes provided to that end which are workably connected to a control. The control is adapted to set the desired pressure in one or several chambers and possibly regulate it. Thus, the piston rod 18 and the top plate 15 connected thereto are movable in an upward direction between a supporting position 19 (see fig.3), wherein the upward directed pressure cylinder 13 supports the load when in use and a resting position 20 (see fig.4), wherein the upward directed pressure cylinder 17 does not support the load 10 when in use and the top plate 15 rests on the beam-shaped structure 13 of the support 7. Preferably, the fluid is a liquid such as for example oil but it can also be a gas, such as for example air.

The upward directed supports 7 are tiltable around the support shaft 9 mounted on the support structure 1. The support shaft lies in a plane parallel to the surface over which the device moves, which is horizontal in the example shown. The support shaft 9 is parallel to the transport direction 2. The hinge connection 8 is located on the transversally outwardly facing side of the support 7 such that when tilting, the support tilts outwardly transversally and as such is not obstructed by the other supports when tilting. The supports 7 are tiltable over an angle of at least 90° or any other angle which ensures that the tilted away support is no longer an obstruction to move the load 10 past the obstacle.

For supporting the support during the tilting movement, each upward directed support 7 is provided with a support connection 21, in the example shown in fig. 3 and 4 in the form of a pressure cylinder. One end of said pressure cylinder 21 is provided with a rod attachment with which it is hingedly connected to the side of the support 7 which faces the bottom when tilting, being in this example the side of the support 7 facing transversally outwardly. The other opposite end of said pressure cylinder 21 is provided with a bottom attachment with which it is hingedly connected to the support structure. When tilting the support 7 away and back the ends of the pressure cylinder 21 move toward and away from each other respectively by extending or retracting the piston rod of the pressure cylinder by adding or removing a fluid in or from the corresponding chamber in the casing of the pressure cylinder 21. The fluid is supplied and discharged via pipes provided to that end which are workably connected to a control. The control is adapted to set the desired pressure in one or several chambers and if relevant to regulate it during the tilting movement. Moreover, the configuration is such that both hinge shafts, around which the ends of the pressure cylinder 21 hinge and the support shaft 9 are parallel to each other. This shown configuration supports a gradual movement of the support 7 during tilting. This is illustrated in fig. 4 where the upward directed support is shown in an upright non-tilted position, tilted over an angle of 45° and tilted over an angle of 90°

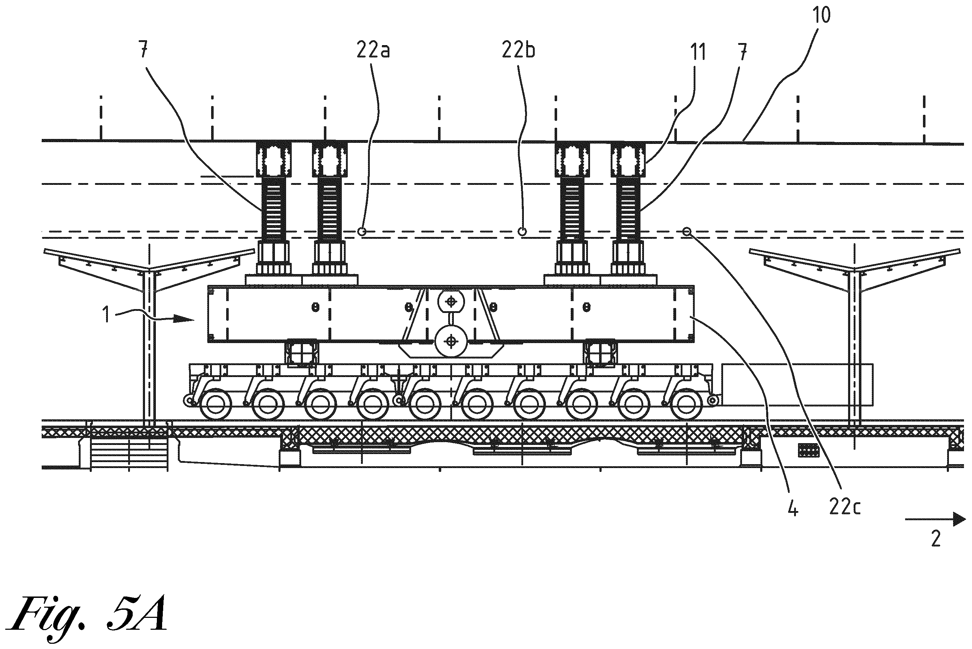

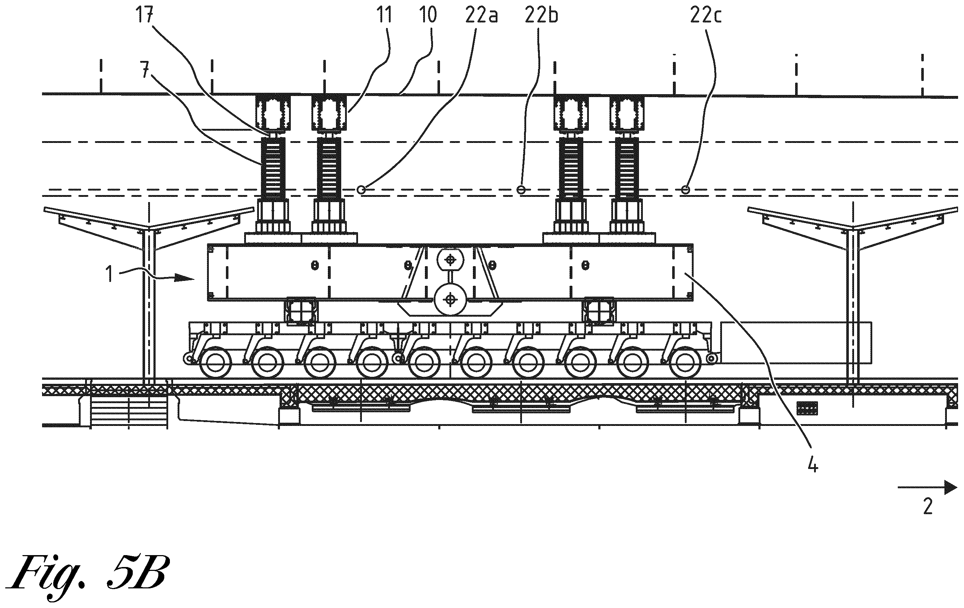

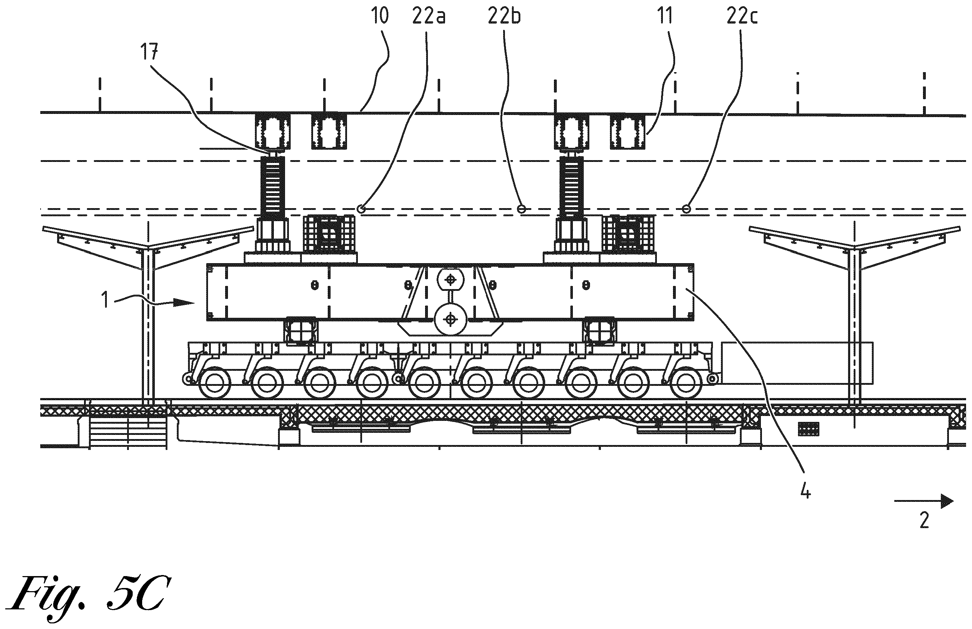

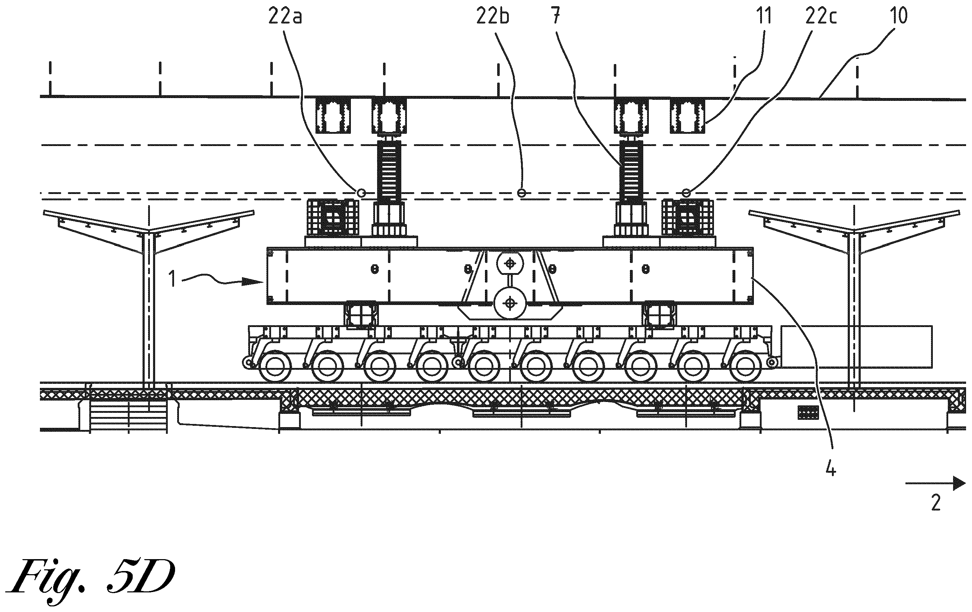

With reference to the characteristics of the device as shown in figures 1 to 4 the method for transporting a load 10 past an obstacle in the air as shown in fig. 5 is very simple and as follows.

At the start of the method the device with the load 10 is borne by the supports 7 in the transport direction 2 toward the obstacle which in this example is formed by high-voltage lines 22 which extend at height between the load 10 and the support structure 1. The movement is interrupted as soon as one or more supports obstruct the obstacle. Fig.5A shows an example of this, i.e. the further movement of the device is prevented because supports obstruct the lines indicated with 22a and 22c.

In a next step the load is jacked up by moving the jacks 17 to the supporting position 19 as shown in fig.5B. The supports 7 that prevent the further movement of the load 10 are cleared by moving the corresponding jacks 17 to the resting position while ensuring that the load is still borne by at least one support 7 of each pair of supports. The cleared supports, as shown in fig.5C are tilted away outwardly in the transversal direction such that with a further movement of the device said supports no longer obstruct the lines 22a, 22c. Optionally, the jacks 17 of the non-tilted away upward directed supports 7 can be moved from the supporting condition (19) to the resting condition (20).

Subsequently, the device with the load is moved in the transport direction 2 until non-tilted away supports 7 obstruct further movement. In the resulting condition, the line 22a is located past the corresponding tilted away supports and line 22c is not yet located past the corresponding tilted away supports. If the jacks 17 of the non-tilted away upward directed supports 7 are located in the resting position (20) they are first moved to the supporting position (19). Subsequently, the tilted away supports moved past the line 22a are tilted back and the jacks (17) of the tilted back supports 7 are moved to the supporting position (17). The supports 7 that prevent the further movement of the load 10, in this case being the rear supports, are cleared by moving the corresponding jacks 17 to the resting position while ensuring that the load is still borne by at least one support 7 of each pair of supports. The cleared rear supports are tilted away outwardly in the transversal direction such that with a further movement of the device they no longer obstruct the line 22a. The resulting condition is shown in fig.5D.

The device with the load can now be moved again over a short distance in the transport direction 2. The steps of tilting away the obstructing supports, moving the device up to the next supports obstructing the lines and tilting back the tilted away supports can be repeated iteratively until the load is past the obstacle, while ensuring that the load 10 is always borne by at least one support of each pair of supports.

The present invention is by no means limited to the embodiment described as an example and shown in the drawings, but a device and a method according to the invention for transporting a load past an obstacle in the air can be realised in all kinds of forms and dimensions, without departing from the scope of the invention as described in the enclosed claims.

## Claims

1. A device for transporting a load (10) past an obstacle in the air comprising
a support structure (1) moveable in a transport direction (2) and
at least three pairs of upward directed supports (7), whereby the supports are positioned at a distance from each other in the transport direction and whereby the supports are tiltably mounted on the support structure, each support comprising a jack (17) connected to the support and moveable in an upward direction between a supporting position (19), where the jack supports the load when in use and a resting position (20), where the jack does not support the load when in use and a support connection (21) which at or near its one end is hingedly connected to the support and at or near its other end is hingedly connected to the support structure, whereby the support connection is configured such that the support connection supports the support during tilting, **characterised in that** the device comprises four pairs of supports (7) and two beams (4) placed at a distance from each other which extend parallel to the transport direction (2), whereby on each of the beams two pairs of supports are placed and the supports on the respective beams are placed opposite each other.

2. The device according to claim 1, **characterised in that** the support connection (21) is configured such that when tilting the support (7) toward or away from the support structure (1) the ends of the support connection move toward or away from each respectively.

3. The device according to any one of the previous claims, **characterised in that** the support (7) is tiltable over an angle of 90° or more.

4. The device according to any one of the previous claims, **characterised in that** the tiltable mounting of the support (7) comprises a support shaft (9) around which the support tilts, whereby the support shaft forms an angle with the transport direction with an absolute value in the range of 0° to 60°.

5. The device according to any one of the previous claims, **characterised in that** the mounting of the support connection (21) to the support (7) is located on a side of the support which when tilting away the support is oriented toward the support structure (1).

6. The device according to any one of the previous claims, **characterised in that** the support connection (21) is formed by a hydraulic or pneumatic pressure cylinder.

7. The device according to any one of the previous claims, **characterised in that** the jack (17) is formed by a hydraulic or pneumatic pressure cylinder.

8. The device according to any one of the previous claims, **characterised in that** the supports (7) of the device are placed on the respective beams (4) diagonally opposite relative to each other.

9. The device according to any one of the previous claims, **characterised in that** the supports (7) comprise a hollow tubular structure (13) in which the jack (17) is applied.

10. The device according to claim 9, **characterised in that** the uppersides of the supports (7) are provided with a top plate (15) which is workably connected to the jack (17) and which in the resting position (20) of the jack rests on the tubular structure (13) and in the supporting position (19) of the jack is separated from the tubular structure.

11. A method for transporting a load (10) past an obstacle in the air using a device comprising a support structure (1) moveable in a transport direction (2) and at least three pairs of upward directed supports (7), whereby the supports of each pair are positioned at a distance from each other in the transport direction and whereby the supports are tiltably mounted on the support structure, each support comprising a jack (17) connected to the support and moveable in an upward direction between a supporting position (19), wherein the jack supports the load when in use and a resting position (20), wherein the jack does not support the load when in use and a support connection (21) which on or near its one end is hingedly connected to the support and on or near its other end is hingedly connected to the support structure, whereby the support connection is configured such that the support connection supports the support during tilting, the method comprising the steps of:
- moving the device with the load borne by the supports (7) in the transport direction (2) toward the obstacle which extends upwardly between the load and the support structure (1) until further movement is obstructed by one or more supports;
- jacking up the load by moving the jack (17) to the supporting position (19);
- clearing the one or more supports that obstruct the further movement of the load by moving the corresponding jacks to the resting position (20) such that the load is borne by at least one support of each pair of supports;
- tilting away the one or more cleared supports toward the support structure;
- moving the device with the load in the transport direction until the obstacle is located past the tilted away supports.

12. The method according to claim 11, **characterised in that** the method comprises the steps of:
- tilting back the tilted away supports (7) while the jacks (17) of the supports bearing the load are located in the supporting position (19) and the obstacle is located in the transport direction (2) past the tilted back supports;
- moving the jacks of the tilted back supports to the supporting position;
- clearing the one or more supports that obstruct the further movement of the load by moving the corresponding jacks to the resting position (20) such that the load is borne by at least one support of each pair of supports;
- tilting away the one or more cleared supports toward the support structure); and
- moving the device with the load in the transport direction until the obstacle is located past the tilted away supports.

13. The method according to claim 11 or 12, **characterised in that** after tilting away the cleared supports (7) and before moving the device further the method comprises the step of moving the jacks (17) that support the load from the supporting position (19) to the resting position (20).

14. The method according to any one of the claims 11 to 13, **characterised in that** when jacking up the load the jacks (17) of all supports (7) are simultaneously moved to the supporting position (19).

## Patentansprüche

1. Vorrichtung zum Transport einer Last (10) über ein Hindernis in der Luft hinaus, die das Folgende umfasst:
eine Trägerstruktur (1), die in einer Transportrichtung (2) beweglich ist, und mindestens drei Paare von nach oben gerichteten Trägern (7); wobei die Träger in der Transportrichtung voneinander beabstandet angebracht sind; und wobei die Träger neigbar an der Trägerstruktur angebracht sind; wobei jeder Träger einen Zylinder (17) umfasst, der mit dem Träger verbunden ist und in einer Aufwärtsrichtung zwischen einer Position (19), die eine Stütze bereitstellt, in der der Zylinder die Last während der Verwendung stützt, und einer Ruheposition (20), in der der Zylinder die Last während der Verwendung nicht stützt, beweglich ist; sowie eine Trägerverbindung (21), die an ihrem einen Ende oder in der Nähe desselben gelenkig mit dem Träger verbunden ist und an ihrem anderen Ende oder in der Nähe desselben gelenkig mit der Stützstruktur verbunden ist; wobei die Stützverbindung derart ausgestaltet ist, dass die Stützverbindung den Träger stützt, wenn er geneigt wird; **dadurch gekennzeichnet, dass** die Vorrichtung vier Paare von Trägern (7) und zwei Ständer (4) umfasst, die mit Abstand zueinander angeordnet sind, während sie sich parallel zur Transportrichtung (2) erstrecken; wobei an jedem der Ständer zwei Paare von Trägern angeordnet sind und die Träger an den jeweiligen Ständern einander gegenüberliegend angebracht sind.

2. Vorrichtung nach Anspruch 1, **dadurch gekennzeichnet, dass** die Trägerverbindung (21) derart ausgebildet ist, dass beim Neigen des Trägers (7) in Richtung oder weg von der Stützstruktur (1) die Enden der Trägerverbindung sich in Richtung bzw. weg voneinander bewegen.

3. Vorrichtung nach einem der vorhergehenden Ansprüche, **dadurch gekennzeichnet, dass** der Träger (7) die Fähigkeit hat, sich zu neigen, indem er einen Winkel von 90° oder mehr bildet.

4. Vorrichtung nach einem der vorhergehenden Ansprüche, **dadurch gekennzeichnet, dass** der Einbau des Trägers (7), der es ihm ermöglicht, sich zu neigen, eine Trägerwelle (9) umfasst, um die der Träger geneigt wird; wobei die Trägerwelle einen Winkel mit der Transportrichtung umfasst, der einen Absolutwert aufweist, der in dem Bereich von 0° bis 60° liegt.

5. Vorrichtung nach einem der vorhergehenden Ansprüche, **dadurch gekennzeichnet, dass** der Einbau der Trägerverbindung (21) an den Träger (7) auf einer Seite des Trägers liegt, die, wenn der Träger durch Neigung zur Seite geschoben wird, in Richtung der Trägerstruktur (1) ausgerichtet ist.

6. Vorrichtung nach einem der vorhergehenden Ansprüche, **dadurch gekennzeichnet, dass** die Trägerverbindung (21) über einen hydraulischen oder pneumatischen Druckzylinder ausgeführt wird.

7. Vorrichtung nach einem der vorhergehenden Ansprüche, **dadurch gekennzeichnet, dass** der Zylinder (17) über einen hydraulischen oder pneumatischen Druckzylinder ausgeführt wird.

8. Vorrichtung nach einem der vorhergehenden Ansprüche, **dadurch gekennzeichnet, dass** die Träger (7) der Vorrichtung an den jeweiligen Ständern (4) angebracht werden, indem sie einander diagonal gegenüberliegend angeordnet sind.

9. Vorrichtung nach einem der vorhergehenden Ansprüche, **dadurch gekennzeichnet, dass** die Träger (7) eine hohle Rohrstruktur (13) umfassen, in der der Zylinder (17) angebracht ist.

10. Vorrichtung nach Anspruch 9, **dadurch gekennzeichnet, dass** die oberen Seiten der Träger (7) mit einer oberen Platte (15) versehen sind, die mit dem Zylinder (17) wirkverbunden ist und die in der Ruhestellung (20) des Zylinders an der Rohrstruktur (13) anliegt und in der Position des Zylinders, die eine Stütze (19) bereitstellt, von der Rohrstruktur getrennt ist.

11. Verfahren zum Transport einer Last (10) über ein Lufthindernis hinweg unter Verwendung einer Vorrichtung, die das Folgende umfasst: eine Trägerstruktur (1), die in einer Transportrichtung (2) beweglich ist, und mindestens drei Paare von nach oben gerichteten Trägern (7); wobei die Träger in der Transportrichtung voneinander beabstandet angebracht sind; und wobei die Träger neigbar an der Trägerstruktur angebracht sind; wobei jeder Träger einen Zylinder (17) umfasst, der mit dem Träger verbunden ist und in einer Aufwärtsrichtung zwischen einer Position (19), die eine Stütze bereitstellt, in der der Zylinder die Last während der Verwendung stützt, und einer Ruheposition (20), in der der Zylinder die Last während der Verwendung nicht stützt, beweglich ist; sowie eine Trägerverbindung (21), die an ihrem einen Ende oder in der Nähe desselben gelenkig mit dem Träger verbunden ist und an ihrem anderen Ende oder in der Nähe desselben gelenkig mit der Stützstruktur verbunden ist; wobei die Stützverbindung derart ausgestaltet ist, dass die Stützverbindung den Träger stützt, wenn er geneigt wird; wobei das Verfahren die folgenden Schritte umfasst:
- das Bewegen der Vorrichtung unter Bedingungen, wie die Last von den Trägern (7) getragen wird, in der Transportrichtung (2) in Richtung des Hindernisses, das sich zwischen der Last und der Trägerstruktur (1) nach oben erstreckt, bis eine weitere Bewegung durch einen oder mehrere Träger behindert wird;
- das Anheben der Last mit Hilfe des Zylinders durch Bewegen des Zylinders (17) in die Position (19), die eine Stütze bereitstellt;
- das Entfernen des einen oder der mehreren Träger, die die weitere Bewegung der Last behindern, durch das Bewegen der entsprechenden Zylinder in die Ruheposition (20) derart, dass die Last von mindestens einem Träger getragen wird, der zu jedem Paar von Trägern gehört;
- das zur Seite Verschieben der einen oder mehreren Träger, die voneinander entfernt wurden, durch Neigen in Richtung der Trägerstruktur;
- das Bewegen der Vorrichtung mit der Last in der Transportrichtung, bis das Hindernis jenseits der Träger liegt, die durch Neigen zur Seite geschoben wurden.

12. Verfahren nach Anspruch 11, **dadurch gekennzeichnet, dass** das Verfahren die folgenden Schritte umfasst:
- das Zurückneigen der Träger (7), die zur Seite geschoben wurden, während sich die Zylinder (17) der lasttragenden Träger in der Position (19), die eine Stütze bereitstellt, befinden und während das Hindernis in der Transportrichtung (2) jenseits der Träger liegt, die zurückgeneigt wurden;
- das Bewegen der Zylinder der Träger, die zurückgeneigt wurden, in die Position, die eine Stütze bereitstellt;
- das Entfernen des einen oder der mehreren Träger, die die weitere Bewegung der Last behindern, durch Bewegen der entsprechenden Zylinder in die Ruhestellung (20) derart, dass die Last von mindestens einem Träger getragen wird, der zu jedem Trägerpaar gehört;
- das zur Seite Schieben des einen oder der mehreren Träger, die voneinander entfernt wurden, in Richtung der Stützstruktur; und
- das Bewegen der Vorrichtung mit der Last in Transportrichtung, während das Hindernis jenseits der Träger liegt, die durch Neigen zur Seite geschoben wurden.

13. Verfahren nach Anspruch 11 oder 12, **dadurch gekennzeichnet, dass** nach dem zur Seite Schieben der Träger (7), die entfernt wurden, und vor dem weiteren Bewegen der Vorrichtung das Verfahren den Schritt umfasst, bei dem die Zylinder (17), die die Last tragen, von der Position (19), die eine Stütze bereitstellt, in die Ruheposition (20) bewegt werden.

14. Verfahren nach einem der Ansprüche 11 bis 13, **dadurch gekennzeichnet, dass** beim Anheben der Last mit Hilfe der Zylinder die Zylinder (17) aller Träger (7) gleichzeitig in die Position (19) bewegt werden, die eine Stütze bereitstellt.

## Revendications

1. Dispositif destiné au transport d'une charge (10) au-delà d'un obstacle dans l'air, qui comprend :
une structure de support (1) qui est mobile dans une direction de transport (2) et au moins trois paires de supports (7) orientés vers le haut ; dans lequel les supports sont disposés à distance les uns des autres dans la direction de transport ; et dans lequel les supports sont montés en inclinaison sur la structure de support ; dans lequel chaque support comprend un vérin (17) qui est relié au support et qui est mobile dans une direction ascendante entre une position assurant un support (19), dans laquelle le vérin supporte la charge au cours de l'utilisation, et une position de mise au repos (20), dans laquelle le vérin ne supporte pas la charge lors de l'utilisation ; ainsi qu'une liaison de support (21) qui, à une de ses extrémités ou à proximité de cette dernière, est reliée en articulation au support et, à son autre extrémité ou à proximité de cette dernière, est reliée en articulation à la structure de support ; dans lequel la liaison de support est configurée d'une manière telle que la liaison de support supporte le support lorsqu'on l'incline ; **caractérisé en ce que** le dispositif comprend quatre paires de supports (7) et deux montants (4) qui sont placés à distance l'un de l'autre tout en s'étendant parallèlement à la direction de transport (2) ; dans lequel, sur chacun des montants, sont disposées deux paires de supports et les supports sur les montants respectifs sont disposés à l'opposé les uns des autres.

2. Dispositif selon la revendication 1, **caractérisé en ce que** la liaison de support (21) est configurée d'une manière telle que, lorsque l'on incline le support (7) dans la direction ou à l'écart de la structure de support (1), les extrémités de la liaison de support se déplacent en direction ou à l'écart l'une de l'autre, respectivement.

3. Dispositif selon l'une quelconque des revendications précédentes, **caractérisé en ce que** le support (7) a la capacité de s'incliner en formant un angle de 90° ou plus.

4. Dispositif selon l'une quelconque des revendications précédentes, **caractérisé en ce que** le montage du support (7) qui permet à ce dernier de s'incliner comprend un arbre de support (9) autour duquel on incline le support ; dans lequel l'arbre de support forme un angle avec la direction de transport qui présente une valeur absolue qui se situe dans la plage allant de 0° à 60°.

5. Dispositif selon l'une quelconque des revendications précédentes, **caractérisé en ce que** le montage de la liaison de support (21) au support (7) est situé sur un côté du support qui, lorsque l'on écarte le support par inclinaison, est orienté dans la direction de la structure de support (1).

6. Dispositif selon l'une quelconque des revendications précédentes, **caractérisé en ce que** la liaison de support (21) est réalisée par l'intermédiaire d'un cylindre de pression hydraulique ou pneumatique.

7. Dispositif selon l'une quelconque des revendications précédentes, **caractérisé en ce que** le vérin (17) est réalisé par l'intermédiaire d'un cylindre de pression hydraulique ou pneumatique.

8. Dispositif selon l'une quelconque des revendications précédentes, **caractérisé en ce que** les supports (7) du dispositif sont placés sur les montants respectifs (4) en étant diagonalement opposés les uns par rapport aux autres.

9. Dispositif selon l'une quelconque des revendications précédentes, **caractérisé en ce que** les supports (7) comprennent une structure tubulaire creuse (13) dans laquelle est monté le vérin (17).

10. Dispositif selon la revendication 9, **caractérisé en ce que** les côtés supérieurs des supports (7) sont munis d'une plaque supérieure (15) qui est reliée de manière opérationnelle au vérin (17) et qui, dans la position de mise au repos (20) du vérin, s'appuie sur la structure tubulaire (13) et, dans la position du vérin assurant un support (19), est séparée de la structure tubulaire.

11. Procédé destiné au transport d'une charge (10) au-delà d'un obstacle dans l'air en utilisant un dispositif qui comprend une structure de support (1) qui est mobile dans une direction de transport (2) et au moins trois paires de supports (7) orientés vers le haut ; dans lequel les supports de chaque paire sont disposés à distance les uns des autres dans la direction de transport ; et dans lequel les supports sont montés en inclinaison sur la structure de support ; dans lequel chaque support comprend un vérin (17) qui est relié au support et qui est mobile dans une direction ascendante entre une position assurant un support (19), dans laquelle le vérin supporte la charge au cours de l'utilisation, et une position de mise au repos (20), dans laquelle le vérin ne supporte pas la charge lors de l'utilisation ; ainsi qu'une liaison de support (21) qui, à une de ses extrémités ou à proximité de cette dernière, est reliée en articulation au support et, à son autre extrémité ou à proximité de cette dernière, est reliée en articulation à la structure de support ; dans lequel la liaison de support est configurée d'une manière telle que la liaison de support supporte le support lorsqu'on l'incline ; dans lequel le procédé comprend les étapes au cours desquelles :
- on déplace le dispositif, dans des conditions telles que la charge est portée par les supports (7), dans la direction de transport (2), dans la direction de l'obstacle qui s'étend vers le haut entre la charge et la structure de support (1) jusqu'à ce qu'un mouvement ultérieur soit entravé par un ou plusieurs supports ;
- on élève la charge à l'aide du vérin en déplaçant le vérin (17) jusque dans la position assurant un support (19) ;
- on éloigne lesdits un ou plusieurs supports qui entravent le mouvement ultérieur de la charge en déplaçant les vérins correspondants dans la position de mise au repos (20) d'une manière telle que la charge est portée par au moins un support faisant partie de chaque paire de supports ;
- on écarte par inclinaison lesdits au moins un ou plusieurs supports qui ont été éloignés, dans la direction de la structure de support ;
- on déplace le dispositif avec la charge dans la direction de transport jusqu'à ce que l'obstacle soit situé au-delà des supports qui ont été écartés par inclinaison.

12. Procédé selon la revendication 11, **caractérisé en ce que** le procédé comprend les étapes au cours desquelles :
- on ramène par inclinaison les supports (7) qui ont été écartés par inclinaison, tandis que les vérins (17) des supports qui portent la charge sont situés dans la position assurant un support (19) et tandis que l'obstacle est situé dans la direction de transport (2) au-delà des supports qui ont été ramenés par inclinaison ;
- on déplace dans la position assurant un support, les vérins des supports qui ont été ramenés par inclinaison ;
- on éloigne lesdits un ou plusieurs supports qui entravent le mouvement ultérieur de la charge en déplaçant les vérins correspondants jusque dans la position de mise au repos (20), d'une manière telle que la charge est portée par au moins un support faisant partie de chaque paire de supports ;
- on écarte par inclinaison lesdits un ou plusieurs supports qui ont été éloignés, dans la direction de la structure de support ; et
- on déplace le dispositif avec la charge dans la direction de transport, tandis que l'obstacle est situé au-delà des supports qui ont été écartés par inclinaison.

13. Procédé selon la revendication 11 ou 12, **caractérisé en ce que**, après avoir écarté par inclinaison les supports (7) qui ont été éloignés et avant de déplacer davantage le dispositif, le procédé comprend l'étape au cours de laquelle on déplace les vérins (17) qui supportent la charge en le faisant passer de la position assurant un support (19) à la position de mise au repos (20).

14. Procédé selon l'une quelconque des revendications 11 à 13, **caractérisé en ce que**, lorsque l'on élève la charge à l'aide des vérins, les vérins (17) de la totalité des supports (7) sont déplacés de manière simultanée jusque dans la position assurant un support (19).
